# EUROPEAN PATENT APPLICATION

(11) **EP 4 578 921 A1**
(43) Date of publication of application: **02.07.2025**
(21) Application number: 24220545.8
(22) Date of filing: 17.12.2024
(51) Int. Cl.: C09J 7/22, C09J 7/38, H01M 50/10

(54) **CURABLE ELECTRICAL INSULATION TAPE**

(30) Priority: 28.12.2023 CN 202311839677
(71) Applicant: TESA SE, 22848 Norderstedt (DE)
(72) Inventor: HAENLE, Mark, 22848 Norderstedt (DE); GUI, Dr. Lei, 22848 Norderstedt (DE); HOSER, Mathias, 22848 Norderstedt (DE); HEIDSIECK, Dr. Sven, 22848 Norderstedt (DE); PALOMARES CERVANTES, Sergio, 22848 Norderstedt (DE); YANG, Bingbing, 22848 Norderstedt (DE); YIN, Yanbo, 22848 Norderstedt (DE)
(74) Representative: tesa SE

(57) **Abstract**

A curable adhesive tape comprising a tapelike backing provided on at least one side with an adhesive layer which consists of a curable adhesive, wherein the backing is colored blue provides for a highly suitable application of radiation energy and corresponding heat input into the curable adhesive, which results in very good adhesive and joining properties, very high bonding strength of the curable adhesive and an optimal wetting of a substrate by the adhesive. Such a curable adhesive tape is particularly suitable for electrical insulation, especially for encasing a battery cell. Preferably the blue color fulfils the following definition: L*a*b* color space: L* = 0 to 93, a* = -33 to 24 and b* = -60 to 0.

## Description

The invention relates to a curable reactive adhesive tape comprising a tapelike backing provided on at least one side with an adhesive layer which consists of a curable adhesive. Also disclosed are the use of the curable adhesive tape and a battery cell encased by a curable adhesive tape.

Joining separate elements is one of the central processes in manufacturing technology. In addition to other methods, such as welding and soldering, adhesive bonding, i.e., joining of elements using an adhesive, is of particular importance nowadays. An alternative to the use of shapeless adhesives, which are applied from e.g. a tube, is provided by so-called adhesive tapes. Pressure-sensitive adhesive tapes in particular are known from everyday use. In said pressure-sensitive adhesive tapes a pressure-sensitive adhesive ensures the adhesive effect, said pressure-sensitive adhesive being permanently tacky and adhesive under normal ambient conditions. Such pressure-sensitive adhesive tapes can be applied to a substrate by pressure and remain adhered thereto but can later be removed more or less without leaving any residue.

However, another type of adhesive tape is also of great importance, particularly for use in industrial production technology. In these adhesive tapes, which are sometimes also referred to as reactive adhesive tapes, curable adhesive tapes or structural adhesive tapes, a curable adhesive compound is used. Corresponding curable adhesives have not yet reached their maximum degree of crosslinking in the state intended for application and can be cured by external influences by initiating polymerization in the curable adhesive and thereby increasing the degree of crosslinking. This changes the mechanical properties of the now cured adhesive, particularly increasing viscosity, surface hardness and bonding strength.

Curable adhesives, also referred to as structural adhesives or reactive adhesives, are known in the prior art and can have very different compositions from a chemical point of view. What all curable adhesives have in common is that the crosslinking reaction can be triggered by external influencing factors, for example by the supply of energy, in particular by temperature, plasma or radiation curing, and/or contact with a substance that promotes polymerization, as is the case, for example, with moisture-curing adhesives. Exemplary adhesives are disclosed, for example, in DE 102015222028 A1, EP 3091059 A1, EP 3126402 B1, EP 2768919 B1, DE 102018203894 A1, WO 2017174303 A1 and US 4661542 A.

Despite the known advantages of curable adhesives, they also display properties in processing that are perceived as disadvantageous. Since curable adhesives regularly only achieve the necessary bonding strength in the course of curing, when working with curable adhesives for bonding components it is often necessary to wait for the curable adhesive to cure sufficiently before further processing of the component composites thus produced can take place. This applies in particular in cases where the component composite produced is subjected to strong mechanical loads during further processing, which can cause failure of the bond in the event of insufficient curing.

In practice, in many cases the problem described above is exacerbated by the fact that the curing speed of curable adhesive compounds is typically not constant but can depend on numerous factors. In addition to local variations in chemical composition or environmental parameters, such as ambient temperature and humidity, these factors include, in particular, non-uniform activation of the cure, for example due to varying energy input in the course of radiation-based curing. However, since the bonding strength already achieved cannot be readily determined, even for experienced workers, in the case of conventional curable adhesives, these uncertainties must in many cases be taken into account by ensuring that the period of time before further processing of a component bond joined with the curable adhesive must be even longer as part of a standardized production sequence, in order to be able to reliably rule out a failure of the bond even in the event of slow curing.

As a result of the aspects described above, the bonding of components with a curable adhesive compound can often become a time-determining step in corresponding manufacturing processes, which adversely affects time and cost efficiency.

In view of the above, there is continued interest in the field of adhesive bonding technology in improving curable adhesives and their use. In this respect, however, many development efforts are directed at optimizing the basic curing speed and/or reducing its variance, which is mostly achieved by a change in the chemical composition of the curable adhesive masses. However, since the required physicochemical properties of such adhesive compounds are mostly determined by the respective application requirements, which essentially concern the cured state, there are natural limits to this approach, since even the best curing behavior of a curable adhesive compound offers little advantage if the cured bond that can be produced with it does not meet the specified requirements.

In case of curable adhesive tapes another factor must be considered, namely the backing, which may have a noticeable influence on the curing process and the bonding strength of the tape to the substrate. This is particularly relevant in the case of curing by radiation.

A colorless, transparent backing would seem to be means of choice, as it would appear to guarantee the least alteration and absorption of the UV-radiation required for the curing process. On the other hand, such a colorless, transparent backing reveals any defects or inclusions on the substrate or in the adhesive resulting in a tape which is optically less appealing.

In view of the aforesaid, it is therefore an object of the present invention to provide an adhesive tape that meets the requirements described above and which particularly allows for a curing process that results in a reliable adhesion and bonding strength of the curable adhesive tape while at the same time providing an appealing appearance of the tape and any product covered therewith. Another object of the present invention is the use of said adhesive tape, and also a product obtainable when using said tape.

Proposed as a solution to the technical problems is a curable adhesive tape comprising a tapelike backing provided on at least one side with an adhesive layer which consists of a curable adhesive, wherein the backing is colored blue.

Surprisingly, it has been found that a blue backing provides for a highly suitable application of radiation energy and corresponding heat input into the curable adhesive, which results in very good adhesive and joining properties, very high bonding strength of the curable adhesive. Moreover, the heat input into the system is sufficient to effect an optimal wetting of the substrate by the adhesive, but on the other hand is small enough to avoid an excessive heat generation which would impair or damage the backing. Excessive temperature causes a change in flatness and corrugation of the backing. This is caused by local shrinkage, melting or expansion of the respective polymer. Full-surface bonding of the substrate can no longer be ensured, resulting in insufficient bonding strength. This would result in a tape which does not provide for adhesion and therefore coverage over the entire surface and might lead to insufficient electrical insulation properties.

In addition, the blue color also effects that substrate surface defects or particle inclusions are masked, so that a more appealing appearance of the tape can be obtained. Surprisingly, it has been found that the color blue is particularly suited to provide for a certain opacity ("haze") desirable for hiding optical defects such as scratches.

Preferably, the blue of the backing fulfills the following definition:
L*,a*,b* color space: L = 0 to 93, a = -33 to 24 and b = -60 to 0. More preferably, the following definitions apply:
L* = 0 to 80, particularly 10 to 60;
a* -28 to 20, particularly -22 to 15; and/or
b* -55 to -5, particularly -50 to -10.

A range in the L*a*b* color space is described by specifying the limits for luminance (L), the a component, and the b component. The L* value of the CIELAB color scale is a measure of the brightness of a color. It lies between L*=0 (black) and L*=100 (white). The other values a* and b* are an indication of the hue on the red/green and blue/yellow scales respectively.

The blue thus defined provides for a particularly suitable heat input into the curable adhesive resulting in an advantageous temperature range of 65°C to 95°C and corresponding particularly preferable adhesive and joining properties of the curable adhesive. Other colorings such as yellow, red or green have turned out not to provide for a sufficient heat input into the structural adhesive. This leads to lower bonding strength as compared to the blue coloring according to the invention. For a black coloring one would expect to obtain optimal results due to a maximum input of heat into the system, which should result in particularly good adhesive and joining properties. However, the inventors of the present invention have found that black coloring results in too much heat being introduced into the system with too high warming of the backing, which causes shrinkage, stretching or melting of the polymer backing. This i. a. leads to corrugation of the backing, which in turn prohibits a complete wetting of the backing by the adhesive. Reducing the heat input into tape containing a black colored backing by using a lower total dosage on the other hand leads to improper curing and finally insufficient bonding strength. With the blue backing according to the present invention the heat absorption of the backing is optimal for effecting a heat input into the structural adhesive that leads to a strong and uniform bonding strength of the structural adhesive tape to the desired substrate, particularly due to an improved wetting of the substrate.

Particularly preferable, the transparency of the backing is smaller than 20%. This enables a sufficient coverage of surface defects and ensures optical quality checks of the covered surface via optical systems. In case a certain opacity is desired, the addition of Titaniumoxide, TiO2, as a pigment is particularly preferable. The transparency or transmittance indicates the ratio of the light power arriving at the back of a body through which light has passed to a reference beam path, usually in %.

The term "adhesive tape" is well-known and clear to those skilled in the art of adhesive technology. In the context of the present invention, the term "tape" designates all thin, flat structures, i.e. structures with a predominant extension in two dimensions, in particular films, film sections and labels, preferably tapes of extended length and limited width as well as corresponding tape sections.

The term "backing" refers to the layer of a multilayer adhesive tape, which significantly determines the mechanical and physical properties of the adhesive tape, such as tear strength, stretchability, insulation or recovery. Common materials for the backing layer include woven fabrics, scrims and plastic films, for example PET films and polyolefin films.

In a preferred embodiment, the backing of the tape according to the invention comprises at least one or material selected from the group consisting of polyimide, polybenzimidazole, polyamideimide, polyetherimide, polyacetal, polyphenylene sulfide, polyetheretherketone, polytetrafluoroethylene, polyamide 6, polypropylene, vinyl chloride resin, polystyrene, polyethylene terephthalate, acrylonitrile butadiene styrene, polycarbonate, polyvinyl chloride, ethylene vinyl acetate and polyester, preferably selected from the group consisting of polypropylene, polyethylene terephthalate, polycarbonate and polyvinyl chloride, polyethylene terephthalate and polypropylene being particularly preferred.

The backing can also have electrically insulating properties, so that the corresponding adhesive tape according to the invention has electrically insulating properties and can be used to electrically insulate an object. For this purpose, insulating carrier films with a volume resistivity of >10¹⁵ Ωcm, preferably >10¹¹ Ωcm, further preferably >10¹¹ Ωcm, determined according to DIN EN 62631-3-1 (VDE 0307-3-1): 2017-01 is used. Accordingly, in a preferred embodiment, the adhesive tape according to the invention can be a double-sided adhesive tape whose insulating backing film is provided on both sides with a curable adhesive composition. In another preferred embodiment, the adhesive tape according to the invention is a single-sided adhesive tape the electrically insulating backing film of which is provided on one side with a curable adhesive composition. Such single-sided adhesive tapes are ideally suited for encasing battery cells in hybrid vehicles and purely electric vehicles.

There are basically no restrictions with regard to the thickness of the backing. Preferably, the backing has a thickness in the range from 10 µm to 200 µm, particularly in the range from 20 µm to 100 µm, more preferably in the range from 30 µm to 90 µm, particularly preferably in the range from 40 µm to 75 µm.

Preferably, the blue color of the backing is effected by at least one of the dyes selected from the group consisting of 1,4-bis(mesitylamino)anthraquinone (CAS: 116-75-6), benzoyl leuco methylene blue (CAS: 1249-97-4), Nile blue (CAS: 2381-85-3 (hydrochloride), 3625-57-8 (sulfate) and CAS: 53340-16-2 (perchlorate)), copper phthalocyanine (CAS 147-14-8). Particularly preferred the one or more dyes are selected from the group consisting of 1,4-bis(mesitylamino)anthraquinone and copper phthalocyanine. These dyes provide for a particularly suitable blue coloring of the backing in accordance with the curable adhesive tape of the present invention, especially as they effect a uniform distribution of the color and a lasting coloring.

According to the invention, a curable adhesive (also referred to as structural adhesive, reactive adhesive) is used (see Römpp, Georg Thieme Verlag, document identifier RD-19-04489, last update: September 2012). According to DIN EN 923: 2006-01, curable adhesives are adhesives that form bonded joints capable of maintaining a specified strength in a structure for a specified extended period of time (according to ASTM definition: "bonding agents used for transferring required loads between adherends exposed to service environments typical for the structure involved"). These are thus adhesives for chemical and physical bonding under high stress, which when cured help to strengthen the bonded substrates and are used to manufacture structures made of metals, ceramics, concrete, wood or reinforced plastics.

In a further preferred embodiment, the curable adhesive composition comprises, based on the total mass of the curable adhesive composition:
a) one or more film-forming (co)polymers in a combined mass fraction in the range from 20 to 90%,
b) one or more polymerizable epoxy compounds in a combined mass fraction in the range of 20 to 90%, wherein the epoxy compounds are selected from the group consisting of monomeric and oligomeric epoxy compounds, and
c) one or more cationic photoinitiators in a combined mass fraction in the range of 0.5 to 7%.

Such a curable adhesive composition provides for particularly good adhesive properties including stable and lasting adhesive joints.

Particularly preferable, the combined mass fraction of the (co)polymers in the curable adhesive composition is in the range of 20 to 65%, based on the mass of the curable adhesive composition.

Further preferable, the combined mass fraction of the polymerizable epoxy compounds in the curable adhesive composition is in the range of 30 to 65%, based on the mass of the curable adhesive composition.

As is well-known and customary in the industry, the mass fractions are given as combined mass fractions of the one or more components, thereby expressing that the mass fraction of the correspondingly formed components taken together meets the relevant criteria, the mass of the curable adhesive composition being the reference system in each case in the absence of other indications.

The curable adhesive composition according to the invention is curable. After being cured, the curable adhesive composition functions as a curable adhesive. According to DIN EN 923:2016-03, curable adhesives are suitable for the manufacture of load-bearing structures in which the bonded joint can be subjected to a high percentage of the maximum breaking force over extended periods without failure (see above). These are therefore adhesives for chemically and physically highly stressable bondings that help to strengthen the adhesive tapes in the cured state.

The components contained in the curable adhesive composition according to the invention are explained in more detail below. In this respect, the inventors have succeeded in identifying particularly preferred embodiments and proportions by mass for the individual components with which high-performance curable adhesive compositions can be obtained.

The curable adhesive composition according to the invention comprises one or more (co)polymers. The skilled person understands that the (co)polymers are usually assigned the role of film former, wherein the one or more (co)polymers are selected from the group consisting of poly(meth)acrylates, polyurethanes, polyvinyl acetals, e.g. polyvinyl butyral, polysiloxanes, synthetic rubbers, polyesters, phenoxy polymers, polyvinyl alcohols, polyvinyl alcohol copolymers, and alkene-vinyl acetate copolymers, preferably selected from the group consisting of poly(meth)acrylates, phenoxy polymers, polyvinyl alcohols, polyvinyl alcohol copolymers, polyvinyl acetals, such as polyvinyl butyral and ethylene-vinyl acetate copolymers (EVA or EVAC, poly(ethylene-co-vinyl acetate)), in particular selected from the group consisting of poly(meth)acrylates, phenoxy polymers and ethylene-vinyl acetate copolymers.

Additionally, or alternatively, block copolymers, for example (meth)acrylate block copolymers, can also be used as (co-)polymers. Corresponding examples are disclosed, for example, in US 2011003947 A1, US 20080200589 A1, US 2007078236 A1, US 2007078236 A1, US 2012196952 A1, US 2016032157 A1, US 2008146747 A1 and US 2016230054 A1.

The number-average molecular weights Mₙ of the (co)polymers are preferably in a range from 50,000 to 10,000,000 g/mol, particularly preferably in a range from 100,000 to 5,000,000 g/mol, most preferably in a range from 150,000 to 2,000,000 g/mol. The data for the number-average molar mass Mₙ refer to the determination by gel permeation chromatography (GPC). The determination is carried out on 100 µl of clear-filtered sample (sample concentration 4 g/l). Tetrahydrofuran with 0.1% by volume trifluoroacetic acid is used as eluent. The measurement is carried out at 25 °C. A column type PSS-SDV, 5 µm, 103 Å, 8.0 mm * 50 mm (data here and in the following in the order: type, particle size, porosity, inner diameter * length; 1 Å = 10-10 m) is used as precolumn. For separation, a combination of columns of type PSS-SDV, 5 µm, 103 Å as well as 105 Å and 106 Å with 8.0 mm * 300 mm each is used (columns from Polymer Standards Service; detection by differential refractometer Shodex RI71). The flow rate is 1.0 ml per minute. Calibration is performed against PMMA standards (polymethyl methacrylate calibration) for polyacrylates and against PS standards (polystyrene calibration) otherwise (resins, elastomers).

Preferably, regardless of the specific selection of (co)polymers, a curable adhesive composition according to the invention has a combined mass fraction of (co)polymers in the curable adhesive composition in the range from 20 to 65%, preferably in the range from 20 to 60%, more preferably in the range from 25 to 55%, most preferably in the range from 25 to 50%, most preferably in the range from 30 to 45%, based on the mass of the curable adhesive composition.

In addition to the (co)polymers, the curable adhesive composition according to the invention also comprises at least one polymerizable epoxy compound. Together, these epoxy compounds form the part of the curable adhesive composition often referred to by those skilled in the art as reactive resin.

The term "polymerizable" here refers, in accordance with the understanding of the skilled person, to the ability of these compounds to undergo a polymerization reaction, if necessary, after suitable activation. In the case of polymerizable epoxy compounds, the epoxy groups enable the polymerizability.

Curable adhesive compositions according to the invention are particularly preferred, wherein the one or more polymerizable epoxy compounds are selected from the group consisting of polymerizable epoxy compounds having a weight-average molecular weight Mw, measured by GPC, in the range from 300 to 2000 g/mol, preferably in the range from 300 to 1500 g/mol, particularly preferably in the range from 350 to 1300 g/mol. Particularly preferred is additionally or alternatively also a curable adhesive composition, wherein the one or more polymerizable epoxy compounds are selected from the group consisting of polymerizable epoxy compounds having a weight average molecular weight M_{w}, measured by GPC, of 2000 g/mol or less.

The polymerizable epoxy compounds may be, for example, aromatic or aliphatic, in particular cycloaliphatic. Polymerizable epoxy compounds on average often have at least two epoxy groups per molecule, preferably more than two epoxide groups per molecule. Preferred in this respect is a curable adhesive composition according to the invention, wherein the one or more polymerizable epoxy compounds are selected from the group consisting of epoxy compounds having two or more epoxy groups, preferably two epoxy groups.

Exemplary polymerizable epoxy compounds include epoxycyclohexane carboxylates, such as 4-epoxy¬cyclohexyl methyl-3,4-epoxycyclohexane carboxylate, 3,4-epoxy-2-methylcyclohexyl methyl-3,4-epoxy-2-methylcyclohexane carboxylate, and bis(3,4-epoxy-6-methyl¬cyclohexyl¬methyl)adipate. Further examples of polymerizable epoxy compounds are disclosed, for example, in US 3,117,099 A. Other polymerizable epoxy compounds particularly useful in the application of the present invention include glycidyl ether monomers, such as those disclosed in US 3,018,262. Examples include the glycidyl ethers of polyhydric phenols obtained by reacting a polyhydric phenol with an excess of chlorohydrin, such as epichlorohydrin (e.g., the diglycidyl ether of 2,2-bis-(2,3-epoxypropoxyphenol) propane). In particular, diglycidyl ethers of bisphenols, such as bisphenol-A (4,4'-(propane-2,2-diyl)diphenol) and bisphenol-F (bis(4-hydroxyphenyl)-methane). Such reaction products are commercially available in various molecular weights and states of aggregation (for example, so-called type 1 to type 10 BADGE resins). Typical examples of liquid bisphenol A diglycidyl ethers are Epikote 828, D.E.R.331, Araldite GY 250CH and Epon 828. Typical solid BADGE resins are Araldite GT6071, GT7072, Epon 1001 and D.E.R. 662. Other reaction products of phenols with epichlorohydrin are the phenolic and cresol novolak resins such as the Epiclon types or Araldite EPN and ECN types (e.g. ECN1273).

In the opinion of the inventors, a curable adhesive composition according to the invention is preferred, wherein the one or more polymerizable epoxy compounds are selected from the group consisting of epoxy compounds having at least one cycloaliphatic group, in particular a cyclohexyl group or dicyclopentadienyl group. Preferred is additionally or alternatively a curable pressure-sensitive adhesive composition according to the invention, wherein the one or more polymerizable epoxy compounds are selected from the group consisting of bisphenol A diglycidyl ethers and bisphenol F diglycidyl ethers, preferably bisphenol A diglycidyl ethers.

According to the inventors, particularly advantageous curable adhesive compositions can be obtained if two or more different polymerizable epoxy compounds are used, especially if they differ in their aggregate state at room temperature. Preferably, a curable adhesive composition according to the invention, wherein the curable adhesive composition comprises one or more polymerizable epoxy compounds selected from the group of epoxy compounds which are solids or highly viscous at 25 °C and have a dynamic viscosity of 50 Pa s or more, preferably 100 Pa s or more, more preferably 150 Pa s or more, and/or wherein the curable sensitive adhesive composition comprises one or more polymerizable epoxy compounds selected from the group of epoxy compounds which are a liquid having a dynamic viscosity at 25 °C of 40 Pa s or less, preferably 20 Pa s or less, most preferably 10 Pa s or less. In the context of the present invention, the dynamic viscosity is thereby determined according to DIN 53019-1 from 2008; at 25 °C, with a shear rate of 1 s⁻¹.

Preferably, irrespective of the specific selection of the polymerizable epoxy compounds, the combined mass fraction of the polymerizable epoxy compounds in the curable adhesive composition is in the range from 30 to 65%, preferably in the range from 30 to 60%, particularly preferably in the range from 35 to 55%, most preferably in the range from 35 to 50%, based on the mass of the curable adhesive composition.

Sulfonium, iodonium and metallocene-based systems in particular can be used as initiators for cationic radiation-based, i.e. often UV-induced, curing of epoxy compounds. For examples of sulfonium-based cations, please refer to US 6,908,722 B1. Examples of anions that serve as counterions for the above-mentioned cations are tetrafluoroborate, tetraphenyl borate, hexafluorophosphate, perchlorate, tetrachloroferrate, hexafluoroarsenate, hexafluoroantimonate, pentafluorohydroxyantimonate, hexachloroantimonate, tetrakispentafluorophenyl borate, tetrakis-(pentafluoromethylphenyl)-borate, bi-(trifluoromethylsulfonyl)-amides and tris-(trifluoromethylsulfonyl)-methides. In addition, chloride, bromide or iodide are also conceivable as anions, particularly for iodonium-based initiators, although initiators that are essentially free of chlorine and bromine are preferred. An efficient example of such a system is triphenylsulfonium hexafluoroantimonate. Other suitable initiators are disclosed, for example, in US 3,729,313 A, US 3,741,769 A, US 4,250,053 A, US 4,394,403 A, US 4,231,951 A, US 4,256,828 25 A, US 4,058,401 A, US 4,138,255 A and US 2010/063221 A1.

Specific examples of sulfonium salts that can be used are in particular triarylsulfonium salts, for example triphenylsulfonium hexafluoroarsenate, triphenylsulfonium hexafluoroborate, triphenylsulfonium tetrafluoroborate, triphenylsulfonium tetrakis-(pentafluorobenzyl)-borate, methyldiphenylsulfonium tetrafluoroborate, methyldiphenylsulfonium tetrakis-(pentafluorobenzyl)-borate, dimethylphenylsulfonium hexafluorophosphate, triphenylsulfonium hexafluorophosphate, triphenylsulfonium hexafluoroantimonate, diphenyl-naphthylsulfonium hexafluoroarsenate, tritolylsulfonium hexafluorophosphate, anisyl-diphenylsulfonium hexafluoroantimonate, 4-butoxyphenyldiphenylsulfonium tetrafluoroborate, 4-chlorophenyldiphenylsulfonium hexafluoroantimonate, tris-(4-phenoxyphenyl)-sulfonium hexafluoro-phosphate, di-(4-ethoxyphenyl)-methylsulfonium hexafluoroarsenate, 4-acetylphenyldiphenylsulfonium-tetrafluoroborate, 4-acetylphenyldiphenylsulfonium tetrakis-(pentafluorobenzyl)-borate, tris-(4-thiomethoxyphenyl)-sulfonium hexafluorophosphate, di-(methoxysulfonylphenyl)-methylsulfonium hexafluoroantimonate, di-(methoxynaphthyl)-methylsulfonium tetrafluoroborate, di-(methoxynaphthyl)-methyl-sulfonium tetrakis-(penta-fluorobenzyl)borate, di-(carbomethoxyphenyl)-methylsulfonium hexa-fluorophosphate, (4-octyloxyphenyl)-diphenylsulfonium tetrakis-(3, 5-bis-trifluoro-methylphenyl)-borate, tris-[4-(4-acetylphenyl)-thiophenyl]-sulfonium tetrakis-(pentafluorophenyl)-borate, tris-(dodecyl-phenyl)-sulfonium tetrakis-(3,5-bis-trifluoromethylphenyl)-borate, 4-acetamidephenyldiphe-nylsulfonium tetrafluoroborate, 4-acetamidephenyl-diphenylsulfonium tetrakis-(pentafluoro-benzyl)-borate, dimethyl-naphthylsulfonium hexafluorophosphate, trifluoromethyldiphenylsulfonium tetrafluoroborate, trifluoromethyldiphenylsulfonium tetrakis-(pentafluorobenzyl)-borate, phenylmethylbenzyl-sulfonium hexafluorophosphate, 5-methylthianthrenium hexa-fluorophosphate, 10-phenyl-9,9-dimethylthioxanthenium hexafluorophosphate, 10-phenyl-9-oxothioxanthenium tetrafluoroborate, 10-phenyl-9-oxothioxanthenium tetrakis-(pentafluoro-benzyl)-borate, 5-methyl-10-oxothianthrenium tetrafluoroborate, 5-methyl-10-oxothianthreni-umtetrakis-(pentafluorobenzyl)-borate and 5-methyl-10,10-dioxothianthrenium hexafluorophosphate. Specific examples of usable iodonium salts are diphenyliodonium tetrafluoroborate, di-(4-methylphenyl)-iodonium tetrafluoroborate, phenyl-4-methylphenyliodonium tetrafluoroborate, di-(4-chlorophenyl)-iodonium hexafluorophosphate, dinaphthyliodonium tetrafluoroborate, di-(4-trifluoromethylphenyl)-iodonium tetrafluoroborate, diphenyliodonium hexafluorophosphate, di-(4-methylphenyl)-iodonium hexafluorophosphate, diphenyliodonium hexafluoroarsenate, di-(4-phenoxyphenyl)-iodonium tetrafluoroborate, phenyl-2-thienyliodonium hexafluorophosphate, 3,5-dimethylpyrazolyl-4-phenyliodonium hexafluorophosphate, diphenyliodonium hexafluoroantimonate, 2, 2'-diphenyliodonium tetrafluoroborate, di-(2,4-dichlorophenyl)-iodonium hexafluorophosphate, di-(4-bromophenyl)-iodonium hexafluorophosphate, di-(4-methoxyphenyl)-iodonium hexafluorophosphate, di-(3-carboxyphenyl)-iodonium hexafluorophosphate, di-(3-methoxycarbonylphenyl)-iodonium hexafluorophosphate, di-(3-methoxysulfonylphenyl)-iodonium hexafluorophosphate, di-(4-acetamidophenyl)-iodonium hexafluorophosphate, di-(2-benzothienyl)-iodonium hexafluorophosphate, diaryl-iodonium tristrifluoromethylsulfonylmethide such as diphenyliodonium hexafluoroantimonate, diaryliodonium tetrakis-(pentafluorophenyl)-borate such as diphenyliodonium tetrakis-(pentafluorophenyl)-borate, [4-(2-hydroxy-n-tetradesiloxy)-phenyl]-phenyliodonium hexafluoroantimonate, [4-(2-hydroxy-n-tetrade-siloxy)-phenyl]-phenyliodonium trifluorosulfonate, [4-(2-hydroxy-n-tetradesiloxy)-phenyl]-phenyl iodonium hexafluorophosphate, [4-(2-hydroxy-n-tetradesiloxy)-phenyl]-phenyl-iodonium tetrakis-(pentafluorophenyl)-borate, bis-(4-tert-butylphenyl)-iodonium hexafluoroantimonate, bis-(4-tert-butylphenyl)-iodonium hexafluorophosphate, bis-(4-tert-butylphenyl)-iodonium trifluorosulfonate, bis-(4-tert-butylphenyl)-iodonium tetrafluoroborate, bis-(dodecylphenyl)-iodonium hexafluoroantimonate, bis-(dodecylphenyl)-iodonium tetrafluoroborate, bis-(dodecylphenyl)-iodonium hexafluorophosphate, bis-(dodecylphenyl)-iodonium trifluoromethylsulfonate, di-(dodecylphenyl)-iodonium hexafluoroantimonate, di-(dodecylphenyl)-iodonium triflate, diphenyliodonium bisulfate, 4,4'-dichlorodiphenyl-iodonium bisulfate, 4,4'-dibromodiphenyliodonium bisulfate, 3, 3'-dinitrodiphenyliodonium bisulphate, 4,4'-dimethyldiphenyliodonium bisulphate, 4,4'-bis-succinimidodiphenyl-iodonium bisulphate, 3-nitrodiphenyliodonium bisulphate, 4, 4'-dimethoxydiphenyliodonium bisulphate, bis-(dodecylphenyl)-iodonium tetrakis-(pentafluorophenyl)-borate, (4-octyloxyphenyl)-phenyliodonium tetrakis-(3,5-bis-trifluoromethylphenyl)-borate and (tolylcumyl)-iodonium tetrakis-(pentafluorophenyl)-borate, and ferrocenium salts (see for example EP 0 542 716 B1) such as η5-(2,4-cyclopentadien-1-yl)-[(1,2,3,4,5,6,9)-(1-methylethyl)-benzene]-iron.

The curable adhesive may be elastic after curing. A curable adhesive tape with such elastic properties is particularly suitable for shielding substrates and articles and protecting them against external influences, such as vibration, shock or deformation.

The curable adhesive composition could comprise one or more dyes. Preferably, the curable adhesive is colorless. This provides for a very homogeneous activation and uniform heating of the curable adhesive, when irradiated.

Preferably, at least one side of the backing of the curable adhesive tape is coated with the curable adhesive according to the invention. In some cases, a single-sided coating may be preferable, in other cases a double-sided coating may be desirable.

In adhesive tapes according to the invention, the adhesive layers may be covered with a release liner to allow unwinding without problems and to protect the pressure-sensitive adhesive composition from contamination. Such release liners usually consist of a plastic film (e.g. PET or PP) siliconized on one or both sides or a siliconized paper backing.

As pointed out earlier, the backing can also have electrically insulating properties, so that the curable adhesive tape according to the invention has electrically insulating properties and can be used to electrically insulate an object. In a particularly preferable embodiment, the curable adhesive tape is thus a curable electrical insulation tape.

In addition, another subject of the present invention therefore is the use of the curable adhesive tape according to the invention for electrical insulation. In electrical insulation, preferable fields of application include the encasing of a battery cell, particularly a battery cell used in the automotive industry, or the jacketing of elongated items such as harnesses, particularly in automobiles. Further preferred fields of application, particularly of single-sided curable adhesive tapes, are the electrical insulation of metal plates and metal substrates in general and in the automotive industry in particular, the electrical insulation of printed circuit boards and conductor lines. Double-sided curable adhesive tapes are particularly well suited for electrically insulation of two abutting substrates, cell-to-cell joining, attaching battery cells to heating or cooling plates and attaching battery cells to metal or metal frame plates.

Batteries for the automotive industry must meet numerous requirements. In particular, they must be stable and adequately protected to prevent ignition in the event of an accident. This applies in particular to cell-to-pack battery systems, which are a more compact battery unit and do not require battery modules because the battery cell is integrated directly into the battery pack. Housing materials are reduced. This means that the adhesive tape wrapping the battery pack is of particular importance in terms of impact and other damage protection.

The blue coloring of the backing according to the invention ensures, in the case of the curable adhesive composition of the adhesive tape according to the invention, that the heat input by radiation is particularly advantageous for the wetting of the substrate and that the crosslinking of the curable adhesive composition is effected particularly uniformly, so that a particularly stable adhesive bond can be achieved which, for example in the case of the encasing of a battery, ensures that the encased batteries are particularly well protected.

In a particularly preferable embodiment, the encasing of a battery cell is effected by a method comprising the following steps:
(i) providing a battery cell, wherein the battery cell comprises at least two first opposing sidewalls, at least two second opposing sidewalls, at least one bottom surface, and at least one top surface;
(ii) providing an adhesive tape, wherein the adhesive tape is a curable adhesive tape according to the invention;
(iii) contacting the adhesive tape of (ii) and the at least one bottom surface of the battery cell of (i), comprising adhering the at least one curable adhesive layer of the adhesive tape and the at least one bottom surface of the battery cell;
(iv) bringing the curable adhesive tape and the at least two sidewalls S1 and S2 into contact, comprising adhering the at least one curable adhesive layer of the curable adhesive tape and the at least two first sidewalls;
(v) bringing the adhesive tape and the at least two second sidewalls into contact, comprising adhering the at least one curable adhesive layer of the curable adhesive tape and the at least two second sidewalls;
(vi) bringing the curable adhesive tape and the at least one top surface into contact, comprising adhering the at least one curable adhesive layer of the adhesive sheet and the at least one top surface of the battery cell;
wherein the method further comprises at least one step of at least partially crosslinking the curable adhesive layer, wherein the at least one step of crosslinking can be performed after any one of the steps according to (ii) to (vi).

The crosslinking can be effected by heat or - particularly preferable - by radiation. In case of radiation, the curable adhesive tape can be irradiated from either side. That is, in case of a single-side coated tape, the tape may be irradiated from the backing side, i.e. irradiation takes place through the backing, or from the adhesive side, the latter being particularly preferable, as there will be no effects due to possible absorption of radiation by the backing. When the tape is irradiated from the adhesive side, there is more flexibility with respect to the transparency of the backing, i. e. the backing does not need to have a certain degree of transparency.

If radiation takes place from the adhesive side, the backing may even be completely non-transparent. A lesser transparency is positive with respect to the desired masking property of the tape. The lesser the transparency, the more defects in the tape are masked, so that lesser defects will be visible.

### Examples:

### Test method 1 - Color requirement

The adhesive tapes have been evaluated according to the CIELAB Color Scale. The relevant parameters for the blue color space are d8° D65 10°. For the sake of comparison (blue cloud) shades of blue of color scales Pantone, RAL, NCS and Munsell have been used (1079 shades of blue).

### Test method 2 - Corrugation / Wrinkling

Wrinkling is judged by visual inspection. Excessive temperature causes a change in flatness and corrugation. This is caused by local shrinkage, melting or expansion of the respective polymer. Full-surface bonding of the substrate can no longer be ensured, resulting in insufficient bonding strength and at least partial loss of electrical insulation properties. Wrinkling is graded as either "o.k." or "not o.k.", "o.k." indicating no visible change in the flatness and no impairment of the bonding strength.

### Test method 3 - Bonding strength

A double-sided tape is cut into 12.5 mm width strips and is then irradiated from both sides at a specific UV-A (UV LED 365 nm wavelength, 800 mW/cm2 intensity) dosage in the range of 1600 to 4800 mJ/cm² for activation. The activated strip is immediately rolled onto a test plate previously cleaned with solvent, preferably isopropanol. The first test plate, which the tape is rolled on is pressed together with the second test plate at the same area using a pressure of 1 MPa so that they are bond together with the d/s tape (compare the respective scheme in the attachments). The bonded plates are stored at room temperature for seven days for full curing of the tape. Then, a dynamic shear test is carried out at a certain speed of 5 mm/min.

The results have been classified as follows:

| | | |
|---|---|---|
| 1 | very good | >8 MPa |
| 2 | good | >5-8 MPa |
| 3 | poor | 2-5 MPa |
| 4 | very poor | <2 MPa |

### Test method 4 - Coverage

The coverage is judged based on the visibility of surface defects and rated according to the following gamut:
1 - Surface defects of the substrate not visible to the human eye
2 - Surface defects of the substrate predominantly invisible to the human eye
3 - Surface defects of the substrate predominantly visible to the human eye
4 - Surface defects of the substrate clearly visible to the human eye

### Manufacturing of curable adhesive tape

For the explanation of the invention an exemplary curable adhesive composition was manufactured by mixing all components and dissolving in butanone to obtain a solution with a solid content of 58%.

For the (co)polymer the commercially available ethylene-vinyl acetate-coploymer Levamelt 700 from Arlanxeo was used in a concentration of 45 w%. Regarding the epoxides commercially available solid and liquid bisphenol-A-diglycidylether from Olin were used: D.E.R. 662E (solid) 22.5 w% and D.E.R. 331 (liquid) 31 w%. For the cationic photoinitiator Omnicat 320 based on mixed triarylsulphonium hexaantimonate salts in 50% propylene carbonate by IGM Resins was used with 1.5 w%.

The thereby obtained curable adhesive was coated in a dry film thickness of 50 µm onto at least one side of the different backings mentioned in table 1 and 2 using a draw down device.

The adhesive tapes thus prepared have been tested according to the test methods described above. The results are listed in the following tables 1 and 2.

**Table 1: Results Examples according to the invention**

| **Parameter / Result** | **E1** | **E2** | **E3** | **E4** | **E5** | **E6** |
|---|---|---|---|---|---|---|
| Color Backing | blue | blue | blue | blue | blue | blue |
| Color CIELab values L* | 31.30 | 31.63 | 58.01 | 32.56 | 29.05 | 46.48 |
| a* | 6.56 | 10.07 | -1.05 | 3.16 | 2.04 | -19.02 |
| b* | -26.75 | -36.97 | -43.48 | -30.08 | -12.72 | -33.83 |
| Backing Polymer | PET | PET | PET | PP | PEN | PA |
| UV Intensity [mW/cm²] | 800 | 800 | 800 | 800 | 800 | 800 |
| UV Dosage [mJ/cm²] | 3200 | 4800 | 3200 | 3200 | 4800 | 4000 |
| Heat input / temperature [°C] | 78 | 87 | 69 | 75 | 89 | 80 |
| Corrugation / Wrinkling | o.k. | o.k. | o.k. | o.k. | o.k. | o.k. |
| Coverage optical surface defects | 2 | 2 | 2 | 2 | 1 | 2 |
| Bonding strength | 2 | 1 | 2 | 2 | 1 | 1 |

**Table 2: Results Comparative Examples**

| **Parameter / Result** | **V1** | **V2** | **V3** | **V4** | **V5** | **V6** |
|---|---|---|---|---|---|---|
| Color Backing | transparent | green | red | black | black | blue |
| Color CIELab values L* | 99.63 | 63.44 | 51.04 | 2.36 | 2.36 | 29.19 |
| a* | 0.05 | -64.70 | 54.19 | -0.98 | -0.98 | 2.70 |
| b* | 0.09 | 22.90 | 29.80 | 4.91 | 4.91 | -28.92 |
| Backing Polymer | PET | PET | PP | PET | PET | PE |
| UV Intensity [mW/cm²] | 800 | 800 | 800 | 800 | 800 | 800 |
| UV Dosage [mJ/cm²] | 4000 | 3200 | 3200 | 3200 | 1600 | 3200 |
| Heat input / temperature [°C] | 48 | 54 | 59 | 106 | 88 | 81 |
| Corrugation | o.k. | o.k. | o.k. | not o.k. | o.k. | not o.k. |
| Coverage optical surface defects | 4 | 2 | 3 | 1 | 1 | 2 |
| Bonding strength | 3 | 3 | 3 | N/A | 3 | N/A |

Examples E1 to E6 according to the invention display good corrugation properties and an at least good coverage of optical surface defects. The values determined for the bonding strength indicate that there is good adhesiveness to the substrate. The results also show that PEN and PET are particularly suitable backing materials, whereas PE in spite of a blue coloring (V6) does not yield satisfactory results and suffers from corrugation and a corresponding lack of bonding strength. The black colored backings (examples V4 and V5) suffer from large heating and corresponding high temperatures. For V4 this results in backing corrugation and therefore an impossibility of measuring the bonding strength. For V5 the UV dosage was heavily reduced to thereby reduce the heating, which results in curing issues and a poor bonding strength.

## Claims

1. Curable adhesive tape comprising a tapelike backing provided on at least one side with an adhesive layer which consists of a curable adhesive, wherein the backing is colored blue.

2. Curable adhesive tape according to claim 1, wherein the blue of the backing fulfills the following definition:
L*a*b* color space: L* = 0 to 93, a* = -33 to 24 and b* = -60 to 0.

3. Curable adhesive tape according to claim 1 or 2, wherein the backing comprises at least one or material selected from the group consisting of polyimide, polybenzimidazole, polyamideimide, polyetherimide, polyacetal, polyphenylene sulfide, polyetheretherketone, polytetrafluoroethylene, polyamide 6, polypropylene, vinyl chloride resin, polystyrene, polyethylene terephthalate, acrylonitrile butadiene styrene, polycarbonate, polyvinyl chloride, ethylene vinyl acetate and polyester, preferably selected from the group consisting of polypropylene, polyethylene terephthalate, polycarbonate and polyvinyl chloride.

4. Curable adhesive tape according to at least one of claims 1 to 3, wherein the curable adhesive composition comprises, based on the total mass of the curable adhesive composition:
a) one or more film-forming (co)polymers in a combined mass fraction in the range from 20 to 90%,
b) one or more polymerizable epoxy compounds in a combined mass fraction in the range of 20 to 90%, wherein the epoxy compounds are selected from the group consisting of monomeric and oligomeric epoxy compounds, and
c) one or more cationic photoinitiators in a combined mass fraction in the range of 0.5 to 7%.

5. Curable adhesive tape according to claim 4, wherein the combined mass fraction of the (co)polymers in the curable adhesive composition is in the range of from 20 to 65%, based on the mass of the curable adhesive composition.

6. Curable adhesive tape according to claim 4 or 5, wherein the combined mass fraction of the polymerizable epoxy compounds in the curable adhesive composition is in the range of from 30 to 65%, based on the mass of the curable adhesive composition.

7. Curable adhesive tape according to at least one of claims 1 to 6, wherein the blue color of the backing is effected by at least one of the dyes selected from the group consisting of benzoyl-leuco-methylene blue, ethyl violet, Nile blue, 1,4-bis(mesitylamino)-anthraquinone, and copper phthalocyanine.

8. Curable adhesive tape according to at least one of claims 1 to 7, wherein the curable adhesive tape is a curable electrical insulation tape.

9. Use of the curable adhesive tape according to at least one of claims 1 to 8 for electrical insulation.

10. Use of the curable adhesive tape according to claim 9 for encasing a battery cell.

11. Use of the curable adhesive tape according to claim 10, wherein the encasing is effected by a method comprising the following steps:
(i) providing a battery cell, wherein the battery cell comprises at least two first opposing sidewalls, at least two second opposing sidewalls, at least one bottom surface, and at least one top surface;
(ii) providing an adhesive tape, wherein the adhesive tape is a curable adhesive tape according to one of claims 1 to 8;
(iii) contacting the adhesive tape of (ii) and the at least one bottom surface of the battery cell of (i), comprising adhering the at least one curable adhesive layer of the adhesive tape and the at least one bottom surface of the battery cell;
(iv) bringing the curable adhesive tape and the at least two first sidewalls into contact, comprising adhering the at least one curable adhesive layer of the curable adhesive tape and the at least two first sidewalls and;
(v) bringing the adhesive tape and the at least two second sidewalls into contact, comprising adhering the at least one curable adhesive layer of the curable adhesive tape and the at least two second sidewalls;
(vi) bringing the curable adhesive tape and the at least one top surface into contact, comprising adhering the at least one curable adhesive layer of the adhesive sheet and the at least one top surface of the battery cell;
wherein the method further comprises at least one step of at least partially crosslinking the curable adhesive layer, wherein the at least one step of crosslinking can be performed after any one of the steps according to (ii) to (vi).

12. Use of the curable adhesive tape according to one of claims 9 to 11 in the automotive industry.

13. Battery cell encased by a curable adhesive tape according to at least one of claims 1 to 8.
